# EUROPÄISCHE PATENTSCHRIFT

(11) **EP 0 589 002 B1**
(45) Veröffentlichungstag und Bekanntmachung des Hinweises auf die Patenterteilung: **01.03.1995**
(21) Anmeldenummer: 93906434.1
(22) Anmeldetag: 23.03.1993
(51) Int. Cl.: G03B 39/00, H04N 5/335

(54) **ELEKTRONISCHE HOCHGESCHWINDIGKEITSKAMERA**
ELECTRONIC HIGH-SPEED CAMERA
CAMERA ELECTRONIQUE A GRANDE VITESSE

(30) Priorität: 11.04.1992 DE 4212271
(43) Veröffentlichungstag der Anmeldung: 30.03.1994
(73) Patentinhaber: DEUTSCHE FORSCHUNGSANSTALT FÜR LUFT- UND RAUMFAHRT e.V., 53111 Bonn (DE)
(72) Erfinder: MEIER, Gerd, E., A., D-3400 Göttingen (DE); STASICKI, Boleslaw, D-3400 Göttingen (DE)
(74) Vertreter: Viering, Jentschura & Partner
(86) Internationale Anmeldenummer: DE9300266
(87) Internationale Veröffentlichungsnummer: WO9321560

(56) Entgegenhaltungen:
- DE-C- 4 041 564
- US-A- 3 449 758
- REVIEW OF SCIENTIFIC INSTRUMENTS, vol. 62, no. 2, February 1992, New York, US, pp. 364-368, XP000219370, BRETTHAUER et al. : "An electronic Cranz-Schardin Camera".
- PROCEEDINGS OF THE 17TH INTERNATIONAL CONGRESS ON HIGH SPEED PHOTOGRAPHY AND PHOTONICS, vol. 674, 1 September 1986, Pretoria, South Africa, pp. 631-637, GERMER : "High Speed Video Techniques With CCD-Cameras".
- JOURNAL OF THE SOCIETY FOR EXPERIMENTAL STRESS ANALYSIS - EXPERIMENTAL MECHANICS, vol. 24, no. 1, December 1984, USA, pp. 316-327, KAWATA et al. : "Photoelastic Coating Analysis of Dynamic Stress Concentration in Composite Strips".
- PROCEEDINGS OF SPIE - INTERNATIONAL CONFERENCE ON PHOTOMECHANICS AND SPECKLE METROLOGY, vol. 814, 17 August 1987, San Diego, California, USA, pp. 28-35, DALLY et al. : "Applications of Photoelasticity to Elasto-Dynamics".

## Beschreibung

Die Erfindung betrifft eine elektronische Hochgeschwindigkeitskamera zur Aufnahme von schnell bewegten Objekten, einschließlich sichtbar gemachter Vorgänge, mit einer Mehrzahl von im Abbildungsstrahlengang eines optischen Abbildungssystems angeordneten getrennten Halbleiter-Bildsensoren, die an zugeordnete Bildspeicher angeschlossen sind.

Bei einer bekannten Vorrichtung zur elektronischen Bildaufzeichnung (DE-PS 24 60 625) werden schnell ablaufende Vorgänge, wie z.B. der Verlauf eines Lichtbogens, mit Hilfe von optoelektronischen Halbleiter-Bildwandlern wie Fotoelementen, Fototransistoren oder auch Fotodioden, die in Form einer Zeile oder einer Matrix mit mehreren Zeilen hinter einem Linsensystem angeordnet sind und zyklisch nacheinander abgefragt werden, im Auflicht aufgenommen.

Zur photographischen Registrierung von schnell bewegten Objekten, einschließlich sichtbar gemachten Vorgängen (z.B. Strömungen) werden im übrigen Hochgeschwindigkeits-Filmkameras mit Drehtrommeln, -spiegeln oder -prismen benutzt. Diese haben den Nachteil, daß die Photogramme erst nach der Filmentwicklung beurteilt und ausgewertet werden können. Ein direkter Eingriff in den Vorgang anhand der Photogramme ist daher nicht möglich. Die vollelektronische Cranz-Schardin-Kamera nach der nicht vorveröffenlichten deutschen Patentanmeldung P 40 41 564.3 wie auch die in der Rev. Sci. Instr. 62 (2) Febr. 1991 auf Seiten 364 bis 368 beschriebene liefert zwar eine sofort verfügbare Sequenz von Videogrammen, ist jedoch nicht für den Auflichtbetrieb vorgesehen. Diese Durchlicht-Hochgeschwindigkeitskamera kann mit einer Mehrzahl von an zugeordnete Bildspeicher angeschlossenen Halbleiter-Bildsensoren versehen sein, die jeweils über ein eigenes Objektiv verfügen und im Kreis rings einer Spiegelpyramide angeordnet sind, deren Spiegelflächen jeweils einem der Bildsensoren und einer einer Mehrzahl von jenseits des aufzunehmenden Objektes im Kreis angeordneten Leuchtdioden zugeordnet sind, die zyklisch nacheinander impulsbetrieben sind.

Zur photographischen Registrierung von schnell bewegten Objekten oder sichtbar gemachten Vorgängen, insbesondere einmaligen oder nichtperiodischen Vorgängen, wird jedoch eine Hochgeschwindigkeitskamera benötigt, die je nach Art des Objektes sowohl im Durch- als auch im Auflicht arbeiten kann.

Der Erfindung liegt die Aufgabe zugrunde, eine elektronische Hochgeschwindigkeitskamera zu schaffen, die verschleißfrei arbeitet und in ihrem optoelektronischen Aufnahmesystem ohne jegliche Änderung sowohl im Durchlicht als auch im Auflicht verwendbar ist. Die Videogramme sollen vorzugsweise sofort zur Verfügung stehen (Bildschirm, Drucker) und als Computerdateien zur direkten, elektronischen Auswertung geeignet sein.

Die elektronische Hochgeschwindigkeitskamera gemäß der Erfindung ist unter Lösung der genannten Aufgabe mit einem optoelektronischen Aufnahmesystem mit einer Vielzahl von einzelnen Halbleiter-Bildsensoren, sowie Bildspeichern, anderen Eingänge die Bildsensoren angeschlossen sind, und einem das Bild eines Objektes auf die Bildsensoren abbildenden optischen Abbildungssystem versehen, welches ein den Bildsensoren gemeinsames Kameraobjektiv und eine Spiegelpyramide aufweist, die mit ihrer Pyramidenspitze dem Kameraobjektiv zugewandt ist und mit ihrer Achse in der optischen Achse des Kameraobjektivs liegt. Die Bildsensoren sind rings um die optische Achse des Kameraobjektivs im Kreis um die Spiegelpyramide herum angeordnet, wobei jedem der Bildsensoren jeweils eine Spiegelfläche der Spiegelpyramide und jedem der Bildsensoren eine triggerbare elektronische Verschlußeinrichtung zugeordnet ist.

Dieses optoelektronische Aufnahmesystem eignet sich ohne Veränderung sowohl für den Auflichtbetrieb als auch für den Durchlichtbetrieb. Für den Durchlichtbetrieb wird dem Kameraobjektiv ein optisches Durchlichtsystem vorgeschaltet, in dessen Strahlengang das Objekt angeordnet wird. Dabei sind dem optischen Durchlichtsystem eine Mehrzahl von im Kreis angeordneten, punktförmigen Blitzlichtquellen vorgeordnet, die über das optische Durchlichtsystem und das Kameraobjektiv auf jeweils einer der Spiegelflächen abbildbar sind, wobei die Verschlußeinrichtungen mit den Blitzlichtquellen synchronisiert sind.

In dieser Weise kann die erfindungsgemäße elektronische Hochgeschwindigkeitskamera durch ihre neuartige optische und elektronische Anordnung in zwei unterschiedlichen Modi betrieben werden. Im Durchlicht-Betrieb arbeitet die Kamera nach einem modifizierten Cranz-Schardin-Prinzip. Die Modifikation besteht darin, daß die Halbleiter-Bildsensoren nicht jeweils ein eigenes Objektiv, sondern die Kamera nur ein einziges, sämtlichen Bildsensoren, von denen jeweils ein zweidimensionales Bild geliefert werden kann, gemeinsames Kameraobjektiv aufweist, was sowohl die Konstruktion als auch die Justierung wesentlich vereinfacht. Im Auflicht-Betrieb, bei dem das optische Durchlichtsystem und die Blitzlichtquellen abgekoppelt sind, wird der Strahlengang durch die strahlenteilende Wirkung der Objektiv-Spiegelpyramide-Anordnung gleichzeitig auf alle Bildsensoren projiziert. Diese Bildsensoren werden über ihre Verschluß-Elektronik zyklisch nacheinander so aktiviert, daß dadurch eine Bildsequenz entsteht, die in den Bildspeichern, die in einer Bildspeichereinheit mit entsprechend mehreren Bildspeichereingängen zusammengefaßt sein können, gespeichert und in einem vorzugsweise angeschlossenen Bildprozessor verarbeitet werden kann.

Die Blitzlichtquellen können beispielsweise Funkenlichtquellen sein, sind jedoch bevorzugt impulsbetriebene Leuchtdioden oder Laserdioden, die insbesondere sichtbares Licht emittieren. Die Blitzlichtquellen können mit den Bildspeichern synchronisiert sein. Die jeweils als Detektormatrix ausgebildeten Bildsensoren sind vorzugsweise miteinander und mit den Bildspeichern synchronisiert. Die Verschlußeinrichtungen sind bevorzugt asynchron triggerbar und mit den Bildspeichern synchronisiert. Für sehr kurze Verschlußzeiten können die Verschlußeinrichtungen als den Bildsensoren vorgeschaltete Bildverstärker ausgebildet sein. Vorzugsweise ist für optimale Bedingungen und Eingriffsmöglichkeiten an die Verschlußeinrichtungen, die Bildspeicher und ggf. die Blitzlichtquellen ein diese steuernder frei programmierbarer Sequenzer angeschlossen. Bevorzugt sind acht Bildsensoren vorgesehen; es können jedoch auch weniger oder mehr Bildsensoren angewendet werden.

Die durch die Erfindung erzielten Vorteile bestehen insbesondere darin, daß man mit einer relativ einfachen Konstruktion Hochgeschwindigkeits-Durchlichtvideogramme und Hochgeschwindigkeits-Auflichtvideogramme herstellen kann. Weiterhin erlaubt die Kamera eine on-line Beobachtung in beiden Modi. Die aufgenommenen Bilder können mit einer entsprechenden Ausstattung der Kamera elektronisch gespeichert, übertragen, ausgewertet, verarbeitet und sofort ausgedruckt werden. Die Kamera weist keinen mechanischen Verschleiß (keine bewegten Teile) auf und hat keinen Materialverbrauch (kein Film, Entwickler u.s.w.).

Die Erfindung wird anhand von Ausführungsformen erläutert, die wenigstens schematisch aus der Zeichnung ersichtlich sind.

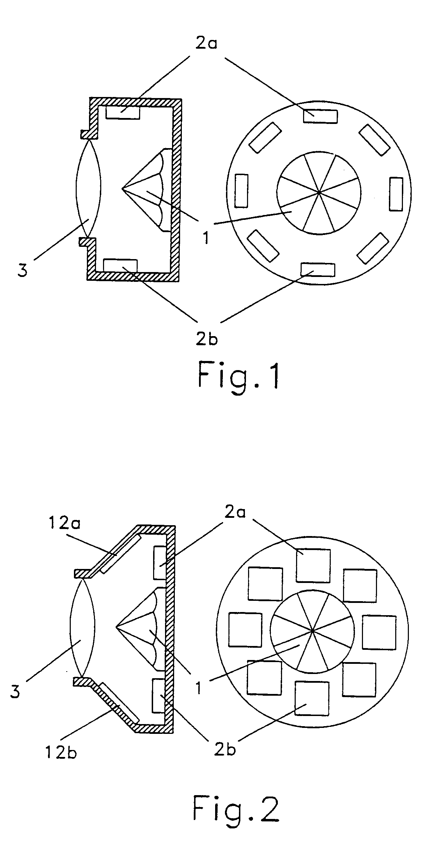

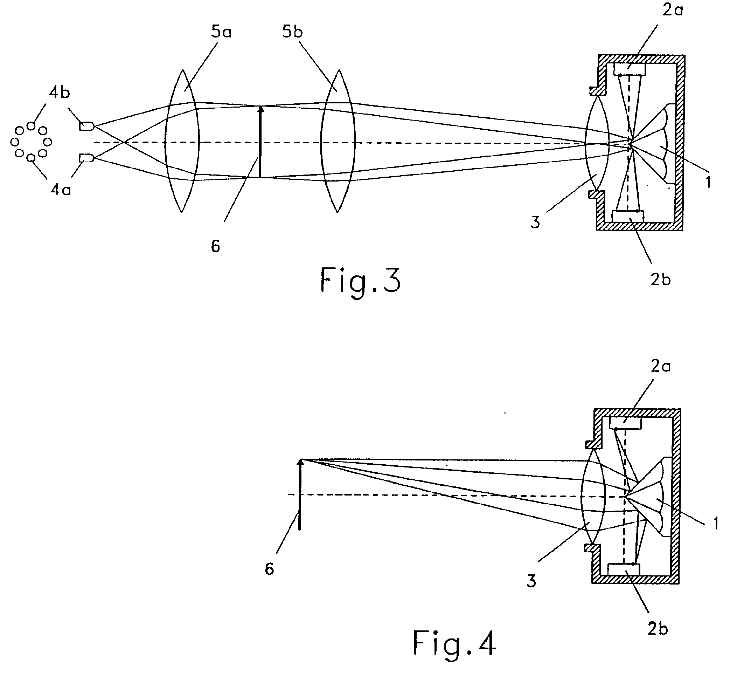

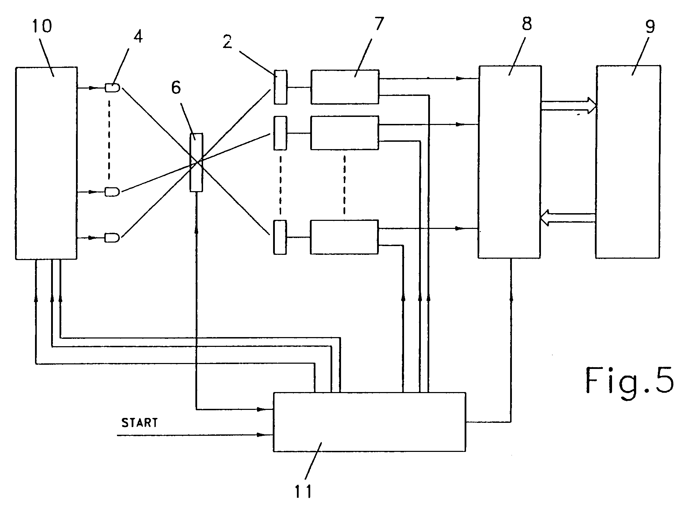

Die Figuren 1 und 2 zeigen zwei Ausführungsformen des optoelektronischen Aufnahmesystems einer elektronischen Hochgeschwindigkeitskamera gemäß der Erfindung. Die Fig. 3 und 4 zeigen den Aufbau der Kamera im Durchlichtbetrieb (Fig. 3) und im Auflichtbetrieb (Fig. 4). Fig. 5 gibt das elektronische Schaltungsschema der Hochgeschwindigkeitskamera nach der Erfindung an.

Das optoelektronische Aufnahmesystem der Hochgeschwindigkeitskamera in der Ausführungsform aus Fig.1 weist ein etwa topfförmiges Gehäuse mit einem Kameraobjektiv 3 auf, hinter dem sich in dem Gehäuse koaxial zu dem Objektiv 3 eine Spiegelpyramide 1 befindet, die mit ihrer Pyramidenspitze dem Objektiv 3 zugewandt ist und mit ihren Spiegelflächen die optischen Strahlen auf die rings dieser Spiegelpyramide auf einem gemeinsamen Kreis mit dem Mittelpunkt in der Achse der Spiegelpyramide 1 angeordneten, auf die Spiegelpyramide 1 senkrecht zu deren Achse gerichteten Bildsensoren 2 ablenkt. Die Spiegelflächenanzahl der Spiegelpyramide 1 stimmt mit der Anzahl der Bildsensoren überein. Der halbe Öffnungswinkel des die Seitenkanten der Spiegelpyramide 1 enthaltenden gedachten Kegels beträgt vorzugsweise 45°. Die Ablenkung des Strahlenganges verursacht eine Verkippung und eine Spiegelung der Bilder. Um die Verkippung der Bilder zu kompensieren, sind die Sensoren um die eigene optische Achse jeweils um einen Winkel von 360°/Sensorenanzahl gedreht angeordnet. Die Spiegelung der Bilder kann per Hardware (z.B. durch umgekehrtes Auslesen der Bildzeilen) oder per Software mit dem Bildprozessor rücktransformiert werden. Die Verkippung und Spiegelung der Bilder kann jedoch auch auf optischem Wege durch zweifache Strahlengangablenkung vermieden werden. Fig.2 zeigt eine Variante des optoelektronischen Aufnahmesystems 1, 2 und 3, bei welcher die durch die Seitenflächen der Spiegelpyramide 1 abgelenkten Strahlen nochmals durch die zusätzlichen Spiegel 12 abgelenkt werden, die nach Fig. 2 in einem Winkel von 45° zur optischen Achse geneigt angeordnet sind. Die Anzahl dieser Spiegel 12 stimmt ebenfalls mit der Sensorenanzahl überein. Bei dieser Variante werden die Bildsensoren vorzugsweise so angeordnet, daß ihre aktiven Flächen in einer zu der optischen Achse der Kamera senkrechten Ebene liegen, wie dies nach Fig. 2 der Fall ist, wonach die Sensoren 2 auf dem Boden des Gehäuses im Kreis angeordnet sind und parallel zur optischen Achse auf die Spiegel 12 gerichtet sind.

Die Bildsensoren 1 verfügen über je eine elektronische Verschlußeinrichtung 7 (Fig. 5), deren Verschlußzeit vorzugsweise sehr kurz ist. Diese Verschlußeinrichtung wirkt asynchron, d.h. ein Bild wird sofort nach einem externen Triggersignal aufgenommen und ausgegeben. Das Bild wird dann in einem Bildspeicher 8 gespeichert, an den ein Bildprozessor 9 angeschlossen ist. Die Anzahl der Bildspeicher-Eingänge (Kanäle) entspricht der Anzahl der Sensoren 2. Die Verschlußeinrichtungen 7 der Sensoren 2 und der Bildspeicher 8 werden von einem Sequenzer 11 getriggert. Dieser Sequenzer 11 erzeugt nach einem elektrischen oder manuellen Startsignal und einem Objekt-Triggersignal eine Serie von Impulsen. Anzahl, Ausgangsnummer und Abstände zwischen den Impulsen lassen sich frei programmieren.

Diese Impulssequenz muß oft mit dem zu videographierenden Objekt (Vorgang) synchronisiert werden. Im Falle eines Objektes, dessen Funktion sich mit einem elektrischen Signal auslösen oder synchronisieren läßt, wird sie mit einem von dem Sequenzer 11 erzeugten Triggersignal ausgelöst oder synchronisiert. In den übrigen Fällen wird dem Objekt ein Triggersignal entnommen und an den Sequenzer 11 geliefert.

Die Kamera arbeitet in zwei Modi: Im Durchlicht-Modus (Fig.3) arbeitet sie nach dem Cranz-Schardin-Prinzip (Zeitschrift für Physik 56 (1929), S.147-183). Dieses Prinzip wurde allerdings durch eine andere optische Anordnung modifiziert. Die Modifikation besteht darin, daß die Kamera 1, 2, 3 ein allen Bildsensoren gemeinsames Objektiv 3 aufweist, was sowohl die Konstruktion als auch die Justierung wesentlich vereinfacht. In dieser Anordnung wird das Licht durch impulsbetriebene Blitzlicht-Punktquellen 4 erzeugt. Als Lichtquellen werden Hochleistungs-LEDs bevorzugt. Diese LEDs können an Lichtleiter angekoppelt und elektrisch direkt (ohne Zuleitungskabel) an den Impulsverstärker 10 (Fig. 5) angeschlossen werden. Dadurch erreicht man eine günstigere Form des Lichtaustrittes mit kleinem Durchmesser und das ausgestrahlte Licht wird wesentlich homogener. Außerdem wird die Verformung der elektrischen Steuerimpulse vermieden, die durch die Fehlanpassung des Diodenanschlußkabels verursacht werden kann. Die Lichtquellen, deren Anzahl mit der der Bildsensoren 2 übereinstimmt (beispielsweise acht), sind auf einem gemeinsamen Kreis, dessen Mittelpunkt auf der Achse des optischen Systems liegt, zu der Achse des optischen Systems parallel ausgerichtet angeordnet. Sie befinden sich meist im Brennpunkt-Abstand der ersten Linse 5a des optischen Durchlichtsystems 5. In dem dadurch entstandenen parallelen Lichtstrahlenbündel befindet sich das zu videographierende Objekt 6. Nach dem Durchgang durch und um das Objekt wird das Licht mit der zweiten Linse 5b des optischen Systems 5 vorfokussiert. Dadurch wird das Licht im Kameraobjektiv 3 eingesammelt und die Lichtverluste werden vermindert. Der Abstand zwischen der Spiegelpyramide 1 und dem Kameraobjektiv 3 wird so gewählt, daß die Lichtquellen scharf auf der jeweils korrespondierenden Spiegelfläche der Spiegelpyramide 1 abgebildet sind. Da dies die engste Stelle des Strahlenganges ist, werden die Bilder durch die Spiegelpyramide 1 optimal voneinander getrennt. Die photoaktiven Flächen der Bildsensoren befinden sich in Tangentialebenen an einen Kreis, dessen Radius vorzugsweise so gewählt wird, daß die Summe des Radius und des Abstandes zwischen dem Objektiv 3 und der Spitze der Spiegelpyramide 1 dem Abstand der Bildebene von dem Objektiv gleicht. Dadurch wird eine scharfe Abbildung des Objektes auf dem jeweiligen Sensor 2 gewährleistet.

Nach dem Startimpuls und je nach Art des Objektes, nach einem Initiieren des Vorganges durch das von dem Sequenzer 11 erzeugte Objekt-Triggersignal oder nach einem von dem Objekt an den Sequenzer gegebenen Objekt-Triggersignal, erfolgt ein sequentielles Aufleuchten der Lichtquellen, gesteuert durch den Sequenzer 11. Dem Aufleuchten jeder Lichtquelle entspricht die Abbildung des Objektes auf dem dieser Lichtquelle zugeordneten Bildsensor. Auf diese Weise entsteht auf den Bildsensoren 2 eine Bildsequenz, die mit dem anschließend von dem Sequenzer erzeugten Bildspeicher-Triggersignal von dem Bildspeicher 8 übernommen und gespeichert wird. Werden synchron mit dem Aufleuchten der Lichtquellen auch die Verschlußeinrichtungen 7 der Bildsensoren 2 von dem Sequenzer getriggert, wird die Dynamik und das Signal/Rausch-Verhältnis der gespeicherten Bilder wesentlich erhöht. Davon wird vorzugsweise Gebrauch gemacht, wenn die Aufnahmen in der Anwesenheit von Streulicht (z.B. Tageslicht) durchgeführt werden müssen. Das Fremdlicht wird in diesem Fall nur in der aktiven Verschlußzeit (z.B. 0,1 ms) und nicht in der ganzen Integrationszeit (40 ms bei CCIR-Norm) das Bild störend beeinflussen.

Die maximale Bildrate der Kamera in dem Durchlicht-Modus hängt mit der maximalen Blitzfolgefrequenz der Lichtquellen zusammen. Die z.Zt. erreichbare Blitzfolgefrequenz bei den V-MOS-gesteuerten Leuchtdioden beträgt etwa 10 MHz. Bei der Verwendung von Laser-Lichtquellen lassen sich wesentlich höhere Bildraten erzielen.

Im Auflicht-Modus (Fig.4) wird das Objekt 6 durch die strahlengangspaltende Wirkung der Spiegelpyramide gleichzeitig auf allen Bildsensoren 2 abgebildet. Die optische, mechanische und elektrische Anordnung des optoelektronischen Aufnahmesystems 1, 2, 3 der Kamera nach Fig.1 bzw. Fig.2 bleibt dabei unverändert. Nach dem Startimpuls und je nach Art des Objektes nach einem Initiieren des Vorganges durch das von dem Sequenzer 11 erzeugte Objekt-Triggersignal oder nach einem von dem Objekt an den Sequenzer 11 gegebenen Objekt-Triggersignal erfolgt sequentielles Aktivieren der Verschlußeinrichtungen 7 der Bildsensoren, gesteuert durch den Sequenzer 11. Die auf diese Weise entstandene Bildsequenz wird auf das anschließend von dem Sequenzer 11 erzeugte Triggersignal hin vom Bildspeicher 8 übernommen und gespeichert.

Die maximale Bildrate der Kamera in dem Auflicht-Modus hängt von der minimalen Verschlußzeit der Bildsensoren 2 ab. Die z.Zt erreichbare kürzeste Verschlußzeit beträgt etwa 0,1 ms, was einer maximalen Bildrate von 10 kHz (ohne zeitliche Überlappung) entspricht. Bei kurzen Verschlußzeiten muß das Objekt entsprechend stärker ausgeleuchtet werden. Wesentlich höhere Bildraten ohne proportional erhöhte Ausleuchtung des Objektes lassen sich jedoch durch die Ausstattung der Bildsensoren 2 mit jeweils einem Bildverstärker, der die Verschlußfunktion übernimmt, realisieren.

## Patentansprüche

1. Elektronische Hochgeschwindigkeitskamera mit einem optoelektronischen Aufnahmesystem mit einer Vielzahl von einzelnen Halbleiter-Bildsensoren (2) sowie Bildspeichern (8), anderen Eingänge die Bildsensoren (2), angeschlossen sind, und einem das Bild eines Objektes (6) auf die Bildsensoren (2) abbildenden optischen Abbildungssystem, welches ein den Bildsensoren (2) gemeinsames Kameraobjektiv (3) und eine Spiegelpyramide (1) aufweist, die mit ihrer Pyramidenspitze dem Kameraobjektiv (3) zugewandt ist und mit ihrer Achse in der optischen Achse des Kameraobjektivs (3) liegt, wobei die Bildsensoren rings um die optische Achse des Kameraobjektivs (3) im Kreis um die Spiegelpyramide (1) angeordnet sind, wobei jedem der Bildsensoren (2) jeweils eine Spiegelfläche der Spiegelpyramide (1) und jedem der Bildsensoren eine elektronische Verschlußeinrichtung (7) zugeordnet ist.

2. Elektronische Hochgeschwindigkeitskamera nach Anspruch 1, bei welcher unter Ausbildung einer Durchlichtkamera dem Kameraobjektiv (3) ein optisches Durchlichtsystem (5a, 5b) vorgeschaltet ist, in dessen Strahlengang das Objekt (6) angeordnet wird, und dem optischen Durchlichtsystem (5a, 5b) eine Mehrzahl von im Kreis angeordneten, punktförmigen Blitzlichtquellen (4) vorgeordnet sind, die über das optische Durchlichtsystem (5a, 5b) und das Kameraobjektiv (3) auf jeweils eine der Spiegelflächen der Spiegelpyramide (1) abbildbar sind, wobei die Verschlußeinrichtungen (7) mit den Blitzlichtquellen (4) synchronisiert sind.

3. Elektronische Hochgeschwindigkeitskamera nach Anspruch 2, bei welcher die Blitzlichtquellen (4) impulsbetriebene Leuchtdioden oder Laserdioden sind.

4. Elektronische Hochgeschwindigkeitskamera nach Anspruch 2 oder 3, bei welcher die Blitzlichtquellen (4) mit den Bildspeichern (8) synchronisiert sind.

5. Elektronische Hochgeschwindigkeitskamera nach einem der Ansprüche 1 bis 4, bei welcher die Bildsensoren (2) miteinander und mit den Bildspeichern (8) synchronisiert sind.

6. Elektronische Hochgeschwindigkeitskamera nach einem der Ansprüche 1 bis 5, bei welcher die Verschlußeinrichtungen (7) asynchron triggerbar sind.

7. Elektronische Hochgeschwindigkeitskamera nach einem der Ansprüche 1 bis 6, bei welcher die Verschlußeinrichtungen (7) als den Bildsensoren (2) vorgeschaltete Bildverstärker ausgebildet sind.

8. Elektronische Hochgeschwindigkeitskamera nach einem der Ansprüche 1 bis 7, bei welcher die Verschlußeinrichtungen (7) mit den Bildspeichern (8) synchronisiert sind.

9. Elektronische Hochgeschwindigkeitskamera nach einem der Ansprüche 1 bis 8, bei welcher die Bildspeicher (8) an einen Bildprozessor (9) angeschlossen sind.

10. Elektronische Hochgeschwindigkeitskamera nach einem der Ansprüche 1 bis 9, bei welcher an die Verschlußeinrichtungen (7), die Bildspeicher (8) und ggf. die Blitzlichtquellen (4) ein diese steuernder frei programmierbarer Sequenzer (11) angeschlossen ist.

11. Elektronische Hochgeschwindigkeitskamera nach einem der Ansprüche 1 bis 10, bei welcher die Bildsensoren (2) auf die Spiegelflächen der Spiegelpyramide (1) gerichtet sind und um ihre Strahlengangachse gedreht angeordnet sind.

12. Elektronische Hochgeschwindigkeitskamera nach einem der Ansprüche 1 bis 10, bei welcher das optische Abbildungssystem im Strahlengang zwischen den Spiegelflächen der Spiegelpyramide (1) und den Bildsensoren (2) angeordnete Umlenkspiegel (12) aufweist.

## Claims

1. Electronic high speed camera with an optoelectronic recording system with a plurality of individual semiconductor video sensors (2) and image memories (8), to the inputs of which the video sensors (2) are connected and with an optical imaging system imaging the image of an object (6) on the video sensors (2) and comprising a camera objective (3) common to the video sensors (2) and a mirror pyramid (1) facing the camera objective (3) with its tip and lying with its axis in the optical axis of the camera objective (3), wherein the video sensors are arranged around the optical axis of the camera objective (3) in a circle surrounding the mirror pyramid (1), wherein to each of the video sensors (2) in each case one comprises a plurality of mirror surface of the mirror pyramid (1), and to each of the video sensors an electronic shutter means (7) is assigned.

2. Electronic high-speed camera according to claim 1, wherein under developing a backlight camera an optical backlight system (5a, 5b) is arranged in series before the camera objective (3), the object will be arranged in the beam path of the backlight system, and a plurality of lumped flashlight sources (4) are arranged in a circle before the optical backlight system (5a, 5b) and each can be imaged by the optical backlight system and by the camera objective (3) on one of the mirror surfaces of the mirror pyramid (1), wherein the shutter means (7) are synchronized with the flashlight sources (4).

3. Electronic high speed camera according to claim 2, wherein the flashlight sources (4) are pulse-operated light emitting diodes or laser diodes.

4. Electronic high speed camera according to claim 2 or 3 wherein the flashlight sources (4) are synchronized with the image memories (8).

5. Electronic high-speed camera according to one of claims 1 to 4, wherein the video sensors (2) are synchronized with eachother and with the image memories (8).

6. Electronic high-speed camera according to one of claims 1 to 5, wherein the shutter means (7) are asynchroneously triggerable.

7. Electronic high-speed camera according to one of claims 1 to 6, wherein the shutter means (7) are designed as gated image intensifiers connected in series with the video sensors (2).

8. Electronic high-speed camera according to one of claims 1 to 7, wherein the shutter means (7) are sychronized with the image memories (8).

9. Electronic high-speed camera according to one of claims 1 to 8, wherein the image memories (8) are connected to an image processor (9).

10. Electronic high-speed camera according to one of claims 1 to 9, wherein to the shutter means (7), the image memories (8) and in a given case the flashlight sources (4) a freely programmable sequencer (11) controlling the same is connected.

11. Electronic high-speed camera according to one of claims 1 to 10, wherein the video sensors (2) are aligned with the mirror surfaces of the mirror pyramid (1) and are turned around their beam path axes.

12. Electronic high-speed camera according to one of claims 1 to 10, wherein the optical imaging system comprises deflection mirrors (12) disposed in the beam paths between the mirror surfaces of the mirror pyramid (1) and the video sensors (2).

## Revendications

1. Caméra électronique ultrarapide pourvue d'un système de prise de vues optoélectronique comprenant une pluralité de capteurs d'image individuels à semiconducteurs (2), ainsi que de mémoires vidéo (8), aux entrées desquelles sont raccordés les capteurs d'image (2), et un système optique de reproduction reproduisant l'image d'un objet (6) sur les capteurs d'image (2), lequel présente un objectif de caméra (3) commun aux capteurs d'image (2) et une pyramide de miroirs (1) dont le sommet est dirigé vers l'objectif de caméra (3) et dont l'axe coïncide avec l'axe optique de l'objectif de caméra (3), les capteurs d'image étant disposés tout autour de l'axe optique de l'objectif de caméra (3) en cercle autour de la pyramide de miroirs, une face de miroir de la pyramide de miroirs (1) étant associée à chacun des capteurs d'image (2) et un dispositif obturateur électronique (7) étant associé à chacun des capteurs d'image.

2. Caméra électronique ultrarapide selon la revendication 1, dans laquelle, dans sa conformation de caméra (3) à lumière transmise, l'objectif de caméra est placé en avant d'un système optique à lumière transmise (5a, 5b), dans le trajet optique duquel est disposé l'objet (6), et une pluralité de sources ponctuelles de flashs lumineux (4) disposées en cercle sont disposées en avant du système optique à lumière transmise (5a, 5b), qui peuvent être reproduites par le système optique à lumière transmise et par l'objectif de caméra (3) chacune sur une des faces de miroirs de la pyramide de miroirs, les dispositifs obturateurs (7) étant synchronisés avec les sources de flashs lumineux (4).

3. Caméra électronique ultrarapide selon la revendication 2, dans laquelle les sources de flashs lumineux (4) sont des diodes électroluminescentes à impulsions ou des diodes laser.

4. Caméra électronique ultrarapide selon la revendication 2 ou 3, dans laquelle les sources de flashs lumineux (4) sont synchronisées avec les mémoires vidéo (8).

5. Caméra électronique ultrarapide selon l'une quelconque des revendications 1 à 4, dans laquelle les capteurs d'image (2) sont synchronisés entre eux et avec les mémoires vidéo (8).

6. Caméra électronique ultrarapide selon l'une quelconque des revendications 1 à 5, dans laquelle les dispositifs obturateurs (7) sont déclenchables de façon asynchrone.

7. Caméra électronique ultrarapide selon l'une quelconque des revendications 1 à 6, dans laquelle les dispositifs obturateurs (7) sont des amplificateurs d'image disposés en amont des capteurs d'image (2).

8. Caméra électronique ultrarapide selon l'une quelconque des revendications 1 à 7, dans laquelle les dispositfs obturateurs (7) sont synchronisés avec les mémoires vidéo (8).

9. Caméra électronique ultrarapide selon l'une quelconque des revendications 1 à 8, dans laquelle les mémoires vidéo (8) sont connectées à un processeur graphique.

10. Caméra électronique ultrarapide selon l'une quelconque des revendications 1 à 9, dans laquelle un séquenceur programmable (11) est connecté aux dispositifs obturateurs (7), aux mémoires vidéo (8) et, le cas échéant, aux sources de flashs lumineux (4) pour les commander.

11. Caméra électronique ultrarapide selon l'une quelconque des revendications 1 à 10, dans laquelle les capteurs d'image (2) sont dirigés vers les faces de miroirs de la pyramide de miroirs (1) et sont disposés tournés autour de leur axe optique.

12. Caméra électronique ultrarapide selon l'une quelconque des revendications 1 à 10, dans laquelle le système de reproduction optique présente des miroirs de déviation (12) disposés dans le trajet optique entre les faces de miroirs de la pyramide de miroirs (1) et les capteurs d'image (2).
